# EUROPÄISCHE PATENTANMELDUNG

(11) **EP 2 020 730 A1**
(43) Veröffentlichungstag der Anmeldung: **04.02.2009**
(21) Anmeldenummer: 07113728.5
(22) Anmeldetag: 02.08.2007
(51) Int. Cl.: H02K 1/14

(54) **Stator für einen Elektromotor**

(71) Anmelder: Microcomponents AG, 2540 Grenchen/Granges (CH)
(72) Erfinder: Dreisbach, Olaf, 3315, Bätterkinden (CH)
(74) Vertreter: Surmely, Gérard

(57) **Zusammenfassung**

Ein Stator für einen Elektromotor, insbesondere für einen Schrittmotor, mit zumindest zwei Statorteilen (14, 16, 18), die gemeinsam ein Statorloch (12) umgeben, wobei die einzelnen Statorteile (14, 16, 18) miteinander verbunden sind, wobei zur Verbindung der Statorteile (14, 16, 18) Verbindungsabschnitte vorgesehen sind, ist dadurch gekennzeichnet, dass die Verbindungsabschnitte (13, 15, 17) in axialer Richtung, parallel zur Achse (A) des Statorlochs (12), gegenüber den benachbarten Abschnitten der angrenzenden Statorteile (14, 16, 18) verjüngt ausgebildet sind und Isthmen zwischen den angrenzenden Statorteilen bilden.

## Beschreibung

Die Erfindung betrifft einen Stator für einen Elektromotor nach dem Oberbegriff des Patentanspruchs 1. Sie betrifft weiterhin ein Verfahren zur Herstellung des Stators sowie einen diesen Stator aufweisenden Elektromotor.

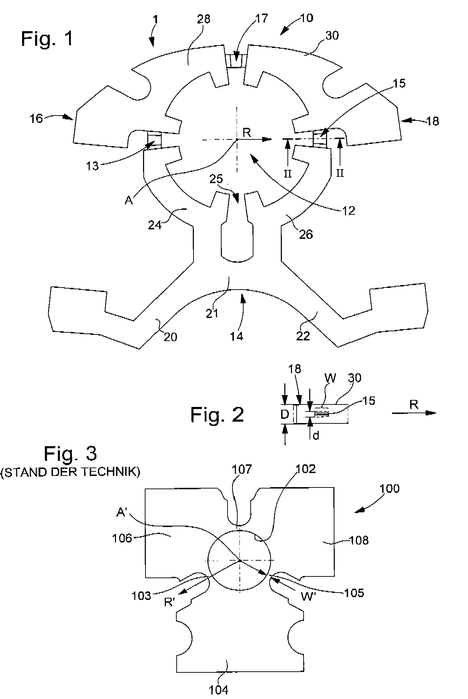

Ein gattungsgemäßer Stator ist allgemein bekannt und in Fig. 3 ausschnittsweise dargestellt. Dieser bekannte Stator 100 weist drei ein Statorloch 102 umgebende Statorteile 104, 106, 108 auf, die untereinander über Stege 103, 105, 107 miteinander verbunden sind. Die Stege 103, 105, 107 sind in Radialrichtung R' zur Achse A' des Statorlochs 102 dünnwandig ausgebildet und weisen in Axialrichtung die gleiche Dicke auf wie die Statorteile 104, 106, 108.

Die Stege 103, 105, 107 bilden isthmusartige Verbindungsabschnitte zwischen den Statorteilen 104, 106, 108 und gewährleisten eine definierte Ausrichtung der Statorteile zueinander, sodass gewährleistet ist, dass das Statorloch 102, in welchem der Rotor läuft, exakt kreisrund ist.

Diese aus mechanischen Gründen vorgesehene Verbindung der Statorteile 104, 106, 108 miteinander besitzt jedoch den Nachteil, dass die Wandstärke w' der Stege 103, 105, 107 aus technischen Gründen (insbesondere wegen des Verarbeitungsverfahrens) nicht beliebig verkleinerbar ist und dadurch ein Rest-Magnetfluss zwischen den Statorteilen 104, 106, 108 übertragen wird. Insbesondere wenn ein mit einem derartigen Stator versehener Elektromotor als Schrittmotor ausgebildet ist, kann diese Übertragung des Rest-Magnetflusses zwischen den Statorteilen so hoch sein, dass die Effizienz und die Genauigkeit des Schrittmotors beeinträchtigt werden.

Aufgabe der vorliegenden Erfindung ist es, einen gattungsgemäßen Stator anzugeben, bei dem die Übertragung des Magnetflusses zwischen den Statorteilen deutlich herabgesetzt ist und der einfach und kostengünstig herstellbar ist.

Diese Aufgabe wird durch das im kennzeichnenden Teil des Patentanspruchs 1 angegebene Merkmals gelöst.

Die Verringerung der Dicke der Verbindungsabschnitte in Axialrichtung erlaubt eine Reduzierung des Querschnittes der Verbindungsabschnitte mit einem effizienten und technisch einfachen Verfahren, insbesondere durch Prägen. Es ist so möglich sehr dünne Verbindungsabschnitte herzustellen. Damit senkt man auf wirkungsvolle Weise die Übertragung des Magnetflusses zwischen den Statorteilen gegenüber der bisherigen Verfahrensweise.

Wenn man in vorteilhafter Weiterbildung der Erfindung die Verbindungsabschnitte zusätzlich auch in radialer Richtung verkleinert, wird der Querschnitt der Verbindungsabschnitte noch weiter reduziert und die Übertragung des Magnetflusses wird noch weiter herabgesetzt.

Vorteilhafte Weiterbildungen der Erfindung sind in den Unteransprüchen angegeben.

Bevorzugt ist der Stator aus drei Statorteilen gebildet, die über insgesamt drei isthmusartige Verbindungsabschnitte miteinander verbunden sind.

Insbesondere vorteilhaft ist es, wenn die isthmusartigen Verbindungsabschnitte einstückig mit den Statorteilen ausgebildet sind und so einen integralen Statorkörper des Stators bilden. Diese einstückige Ausgestaltung des Stators reduziert die Herstellungskosten deutlich.

Ein Verfahren zur Herstellung eines Stators gemäß der Erfindung zeichnet sich durch die Schritte aus:
a) Bereitstellen eines Statorblechs;
b) Erzeugen der Kontur des Statorkörpers (10) einschließlich der die einzelnen Statorteile (14, 16, 18) miteinander verbindenden Verbindungsabschnitte (13, 15, 17), wobei die Dicke der Verbindungsabschnitte (13, 15, 17) in Axialrichtung verringert ist, um Isthmen zwischen den angrenzenden Statorteilen zu erzeugen.

Dieses erfindungsgemäße Verfahren ist geeignet, auf besonders wirtschaftliche Weise eine große Stückzahl von erfindungsgemäßen Statoren in kurzer Zeit kostengünstig herzustellen. Dabei ist zu beachten, dass es sich bei den mit diesen Statoren ausgestatteten Elektromotoren um Produkte einer Massenfertigung von mehreren hunderttausend Stück pro Tag handelt.

Dabei wird der Schritt b) vorteilhafterweise in drei Teilschritte unterteilt:
b1) Einbringen von Löchern in das Statorblech an Orten, die die radialen Begrenzungen der Verbindungsabschnitte bestimmen;
b2) Verringern der Dicke des Statorblechs am Ort der Verbindungsabschnitte (13, 15, 17) in Axialrichtung, um die Isthmen zwischen den angrenzenden Statorteilen zu erzeugen; und
b3) Freistellen der Kontur des Statorkörpers (10) einschließlich der die einzelnen Statorteile (14, 16, 18) miteinander verbindenden Verbindungsabschnitte (13, 15, 17) durch spanlose Fertigung.

Besonders vorteilhaft ist dabei, wenn der Schritt des Freistellens der Kontur des Statorkörpers durch Ausstanzen oder beispielsweise durch Schneiden mittels eines hochenergetischen Strahls aus dem bereitgestellten Statorblech erfolgt.

Vorzugsweise erfolgt der Schritt des Verringerns der Dicke der isthmusartigen Verbindungsabschnitte in Axialrichtung durch Materialverformung, insbesondere durch Prägen. Zusätzlich hat die Materialverformung einen positiven Effekt auf die Erhöhung des magnetischen Widerstandes in diesem Bereich.

Ein derartiger Materialverformungsschritt kann beispielsweise während des Ausstanzens der Kontur des Stators erfolgen, wodurch der Stator in einem Arbeitsgang hergestellt werden kann.

Eine bevorzugte Anwendung des erfindungsgemäßen Stators erfolgt in einem Elektromotor mit einem solchen Stator, einem den Stator aufnehmenden Motorgehäuse sowie einem in das Statorloch eingesetzten und im Motorgehäuse drehbar gelagerten Rotor.

Selbstverständlich ist der Stator in einem derartigen Elektromotor auf herkömmliche Weise mit elektrischen Wicklungen versehen, die auf den jeweiligen Statorabschnitten angebracht sind.

Die Erfindung wird nachfolgend anhand eines Beispiels unter Bezugnahme auf die Zeichnung näher erläutert; in dieser zeigt:
Fig. 1 einen Grundriss eines erfindungsgemäßen Stators;
Fig. 2 einen Schnitt in Radialrichtung durch einen Verbindungsabschnitt entlang der Linie II-II in Fig. 1; und
Fig. 3 einen Stator gemäß dem Stand der Technik.

Fig. 1 zeigt den Körper 10 eines Stators 1 im Grundriss. Zum besseren Verständnis der Erfindung sind die elektrischen Wicklungen des Stators nicht gezeigt. Der Statorkörper ist aus einem Statorblech aus einer Legierung aus Eisen und Silizium (FeSi) oder einer Legierung aus Eisen und Nickel (FeNi) gefertigt.

Der Statorkörper 10 weist ein Statorloch 12 auf, das zur Aufnahme eines (nicht gezeigten) Rotors ausgebildet ist, sodass Rotor und Stator zusammen mit einem (nicht gezeigten) Motorgehäuse einen Elektromotor bilden.

Der Statorkörper 10 besteht aus drei Statorteilen 14, 16, 18, die das Statorloch 12 umgeben. Der untere Statorteil 14 weist zwei sich schräg nach unten erstreckende Arme 20, 22 auf, die im Mittelbereich über einen Mittelabschnitt 21 miteinander verbunden sind. Auf dem ersten Arm 20 ist im Bereich des Mittelabschnitts 21 ein erster kreisbogenförmig gekrümmter Spulenaufnahmeabschnitt 24 vorgesehen, der innerhalb eines ersten Quadranten des kreisförmigen Statorlochs 12 liegt. Auf dem zweiten Arm 22 ist im Bereich des Mittelabschnitts 21 ein zweiter kreisbogenförmig gekrümmter Spulenaufnahmeabschnitt 26 vorgesehen, der innerhalb eines zweiten Quadranten des kreisförmigen Statorlochs 12 liegt.

Vom jeweiligen oberen, freien Ende des ersten beziehungsweise des zweiten Spulenaufnahmeabschnitts 24, 26 erstreckt sich ein erster Verbindungsabschnitt 13 beziehungsweise ein zweiter Verbindungsabschnitt 15 zu einem oberhalb des ersten Statorteils 14 gelegenen zweiten Statorteils 16 beziehungsweise dritten Statorteils 18. Das zweite Statorteil 16 und das dritte Statorteil 18 sind an ihrem jeweiligen freien Ende über einen dritten Verbindungsabschnitt 17 miteinander verbunden.

Sowohl der zweite Statorteil 16, als auch der dritte Statorteil 18 weisen jeweils einen Spulenaufnahmeabschnitt 28 beziehungsweise 30 auf, die jeweils in einem dritten beziehungsweise vierten Quadranten des Statorlochs 12 gelegen sind. Auf diese Weise umgeben der erste Spulenaufnahmeabschnitt 24 und der zweite Spulenaufnahmeabschnitt 26 des ersten Statorteils 14 zusammen mit dem am zweiten Statorteil 16 vorgesehenen dritten Spulenaufnahmeabschnitt 28 und dem am dritten Statorteil 18 vorgesehenen vierten Spulenaufnahmeabschnitt 30 das Statorloch 12.

Während die beiden Spulenaufnahmeabschnitte 24 und 26 des ersten Statorteils in Umfangsrichtung um die Achse A des Statorlochs 12 voneinander beabstandet sind und zwischen sich einen Freiraum 25 ausbilden, ist zwischen dem ersten Spulenaufnahmeabschnitt 24 und dem dritten Spulenaufnahmeabschnitt 28 sowie zwischen dem zweiten Spulenaufnahmeabschnitt 26 und dem vierten Spulenaufnahmeabschnitt 30 und zwischen dem dritten Spulenaufnahmeabschnitt 28 und dem vierten Spulenaufnahmeabschnitt 30 zwar auch in Umfangsrichtung jeweils ein Zwischenraum ausgebildet, der durch die Verbindungsabschnitte 13, 15 beziehungsweise 17 überbrückt wird. Damit der magnetische Fluss in Umfangsrichtung zwischen den jeweiligen Spulenaufnahmeabschnitten in gewünschter Weise unterbrochen ist, sind die Verbindungsabschnitte 13, 15, 17 in Radialrichtung R schmaler ausgebildet, als die jeweils benachbarten Spulenaufnahmeabschnitte 24, 26, 28, 30.

Des weiteren sind die Verbindungsabschnitte 13, 15, 17 auch in Richtung der Achse A dünner ausgebildet, als die jeweils benachbarten Spulenaufnahmeabschnitte 24, 26, 28, 30. In Fig. 2 ist deutlich zu erkennen, dass die Wandstärke w des Verbindungsabschnitts 15 in Radialrichtung R wesentlich geringer ist, als die Radialerstreckung des jeweiligen Spulenaufnahmeabschnitts in diesem Bereich. Weiterhin ist in Fig. 2 zu erkennen, dass die Dicke d (z. B. 0,1 mm) des Verbindungsabschnitts 17 im Bereich von 5 mal bis 20 mal geringer ist als die Dicke D (z. B. 1 mm) des benachbarten Spulenaufnahmeabschnitts 30. Zwar ist in Fig. 2 nur der Verbindungsabschnitt 17 dargestellt, doch sind die Verbindungsabschnitte 13 und 15 in der gleichen Weise ausgebildet.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Stator für einen Elektromotor, insbesondere für einen Schrittmotor, mit zumindest zwei Statorteilen (14, 16, 18), die gemeinsam ein Statorloch (12) umgeben, wobei die einzelnen Statorteile (14, 16, 18) miteinander verbunden sind, wobei zur Verbindung der Statorteile (14, 16, 18) Verbindungsabschnitte vorgesehen sind,
**dadurch gekennzeichnet, dass** die Verbindungsabschnitte (13, 15, 17) in axialer Richtung, parallel zur Achse (A) des Statorlochs (12), gegenüber den benachbarten Abschnitten der angrenzenden Statorteile (14, 16, 18) verjüngt ausgebildet sind und Isthmen zwischen den angrenzenden Statorteilen bilden.

2. Stator nach Anspruch 1,
**dadurch gekennzeichnet, dass** die isthmusartig ausgestalteten Verbindungsabschnitte (13, 15, 17) auch in radialer Richtung zur Achse (A) des Statorlochs (12) gegenüber den benachbarten Abschnitten der angrenzenden Statorteile (14, 16, 18) verjüngt ausgebildet sind.

3. Stator nach Anspruch 1 oder 2,
**dadurch gekennzeichnet, dass** der Stator (1) drei Statorteile (14, 16, 18) aufweist, die über insgesamt drei isthmusartige Verbindungsabschnitte (13, 15, 17) miteinander verbunden sind.

4. Stator nach einem der Ansprüche 1 bis 3,
**dadurch gekennzeichnet, dass** die isthmusartigen Verbindungsabschnitte (13, 15, 17) einstückig mit den Statorteilen (14, 16, 18) ausgebildet sind und so einen integralen Statorkörper (10) des Stators 1 bilden.

5. Verfahren zur Herstellung eines Stators mit den Merkmalen gemäß einem der Patentansprüche 1 bis 4,
**gekennzeichnet durch** die Schritte:
a) Bereitstellen eines Statorblechs;
b) Erzeugen der Kontur des Statorkörpers (10) einschließlich der die einzelnen Statorteile (14, 16, 18) miteinander verbindenden Verbindungsabschnitte (13, 15, 17), wobei die Dicke der Verbindungsabschnitte (13, 15, 17) in Axialrichtung verringert ist, um Isthmen zwischen den angrenzenden Statorteilen zu erzeugen.

6. Verfahren nach Anspruch 5,
**dadurch gekennzeichnet, dass** der Schritt b) des Erzeugens der Kontur des Statorkörpers (10) in folgenden Teilschritten abläuft:
b1) Einbringen von Löchern in das Statorblech an Orten, die die radialen Begrenzungen der Verbindungsabschnitte bestimmen;
b2) Verringern der Dicke des Statorblechs am Ort der Verbindungsabschnitte (13, 15, 17) in Axialrichtung, um den Isthmus zwischen den angrenzenden Statorteilen zu erzeugen; und
b3) Freistellen der Kontur des Statorkörpers (10) einschließlich der die einzelnen Statorteile (14, 16, 18) miteinander verbindenden Verbindungsabschnitte (13, 15, 17) durch spanlose Fertigung.

7. Verfahren nach Anspruch 6,
**dadurch gekennzeichnet, dass** der Schritt b2) des Verringerns der Dicke der Verbindungsabschnitte (13, 15, 17) in Axialrichtung durch Materialverformung, insbesondere durch Prägen, erfolgt.

8. Verfahren nach Anspruch 6 oder 7,
**dadurch gekennzeichnet, dass** der Schritt b3) des Freistellens der Kontur des Statorkörpers (10) durch Ausstanzen aus dem in Schritt a) bereitgestellten Statorblech erfolgt.

9. Elektromotor mit einem Stator gemäß einem der Ansprüche 1 bis 4, einem den Stator (1) aufnehmenden Motorgehäuse sowie einem in das Statorloch (12) eingesetzten und im Motorgehäuse drehbar gelagerten Rotor.
